# EUROPEAN PATENT APPLICATION

(11) **EP 1 988 490 A1**
(43) Date of publication of application: **05.11.2008**
(21) Application number: 07107412.4
(22) Date of filing: 03.05.2007
(51) Int. Cl.: G06K 15/02, G06F 3/12, G06T 5/00

(54) **Selective density enhancement of graphical objects**

(71) Applicant: Océ-Technologies B.V., 5914 CA Venlo (NL)
(72) Inventor: Sevenich, Johannes B.M., 6041 XL Roermond (NL)
(74) Representative: van Meeteren, Arend Anthonie

(57) **Abstract**

The invention relates to a method of processing a digital image, comprising obtaining a description of graphical objects in a page description language, determining dimension parameters of the graphical objects and selecting graphical objects based on a selection criterion which applies to the dimension parameters of the graphical objects. The method further comprises converting an intensity attribute in the page description language of each one of the selected objects such that an intensity parameter indicative of a density of each selected object is increased.

## Description

The invention relates to a method of processing a digital image, comprising obtaining a description of graphical objects in a page description language, determining dimension parameters of the graphical objects and selecting graphical objects based on a selection criterion which applies to the dimension parameters of the graphical objects.

Some application programs are able to generate a specification of a digital document in a page description language (PDL) for describing the layout and graphical objects of said document. The PDL file can be submitted, together with print settings, to an image processing unit having functions for reading, interpreting, rasterizing and halftoning the data. Once halftoning of the data has been executed, an array of dots (bitmap) to be used by the print engine is available. When thin lines or detailed information are printed using known printing techniques such as ink jet printing or electrophotography, the appearance of some printed objects may be vague or even difficult to distinguish.

In a known method for improving the visual aspect of printed thin lines, the widths of graphical objects such as lines described in a PDL are converted in the PDL. For example, the width of thin lines having a width below a certain threshold value are doubled in the PDL description of these lines. This means that the selected lines are treated as being thicker than they are in their unmodified description. The known method is referred to as a thickening by a certain factor, e.g. two.

A problem of the known method is that for some lines, the correction consisting in multiplying the line thickness by a certain factor may be sufficient, while for some other lines, it may be exaggerated, which gives rise to an unwanted print result. Especially, given a certain multiplying factor for the thickening, inharmonious images are printed if the original document contains several types of lines, such as black lines, light grey lines or coloured lines of various intensities.

The object of the invention is to improve a method of processing images of the type set forth above such that all graphical objects of a document in a PDL can be printed with a good visual aspect. This in turn improves the harmony of a printed image containing graphical objects of various types.

This object is achieved by a method which comprises converting an intensity attribute in the page description language of each one of the selected objects such that an intensity parameter indicative of a density of each selected object is increased.

The fact that an intensity attribute in the page description language of each one of the selected objects is converted enables the correction to be applied only to the intensity attributes for which the enhancement of the density is necessary.

In an embodiment of the method of processing a digital image of the present invention, converting an intensity attribute of each one of the selected graphical objects is done by increasing the density at the edges of the selected graphical objects. This step allows thin lines, and contours of graphical objects to be printed with a very sharp visual aspect.

In another embodiment of the method of processing a digital image of the present invention, converting an intensity attribute of each one of the selected graphical objects is done by applying a conversion function to the intensity parameter such that the converted intensity parameter increases when the dimension parameter of each one of the selected graphical objects decreases. The use of this function enables an adaptive conversion of the intensity attributes of the graphical objects. This is particularly beneficial for the harmony of a printed image having graphical objects characterised by differing intensity parameters.

In yet another embodiment of the method of processing a digital image of the present invention, the graphical objects which have a dimension parameter which is less than a threshold parameter are selected, the dimension parameter being expressed in printed dots. This measure takes into account a printing resolution which has, for example, been set by the user. The correction of the intensity attributes may thus be modulated as a function of the printing resolution.

The invention also relates to an apparatus for processing a digital image comprising a reading module for obtaining a description of graphical objects in a page description language, and means for determining dimension parameters of the graphical objects and means for selecting graphical objects based on a selection criterion which applies to the dimension parameters of the graphical objects. The apparatus further comprises converting means for converting an intensity attribute in the page description language of each one of the selected objects such that an intensity parameter indicative of a density of each selected object is increased.

The invention further relates to a computer program product residing on a computer readable medium comprising instructions for causing at least one process unit to perform the steps of the claimed method.

The invention will now be explained with reference to the following examples.
Fig. 1 is a schematic view of a data processing system for printing documents.
Fig. 2 is a flow diagram illustrating the method according to an embodiment of the invention.
Fig. 3 illustrates a conversion of the intensity parameters for thin lines.
Fig. 4 illustrates another conversion of the intensity parameters for thin lines.

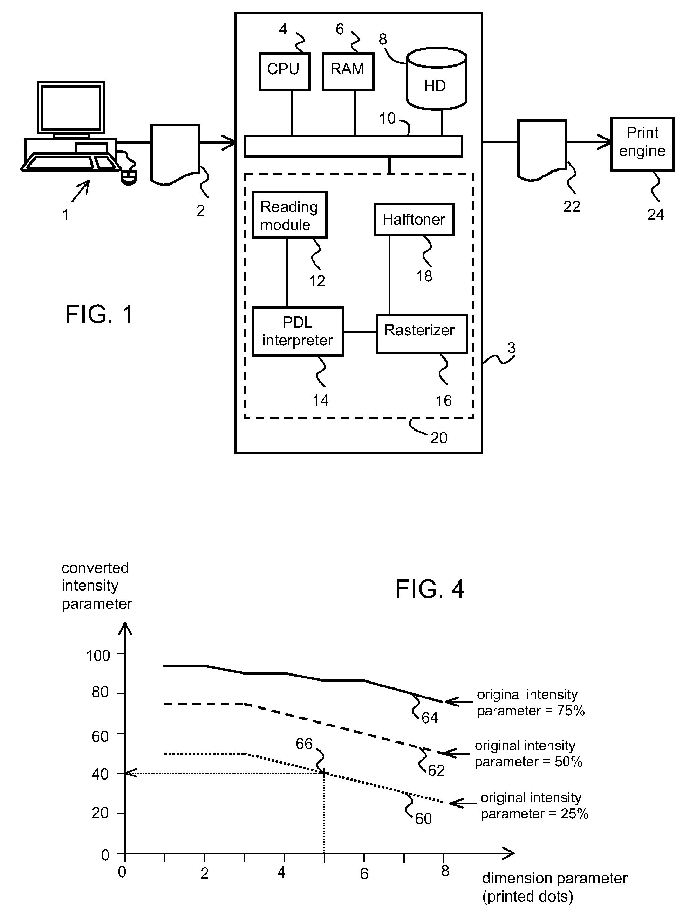

Fig. 1 shows a personal computer 1 comprising a central processing unit, memory means (not shown), display means and input means for enabling a user logged on said computer to create digital documents. A digital document is originally created by a user logged on the personal computer 1 on which an application program is installed for this purpose. Many commercially available application programs are able to generate a specification of the digital document in a page description language (PDL). PDL is a language for describing the layout and contents (i.e. graphical objects and images) of a document. Examples of PDL are among others PostScript (trademark of Adobe Systems) and HP-GL. The PostScript language includes commands that define or build "graphics states" for each of the data areas on the page. These graphics states are sets of default attributes such as angle, scale factor, type-font, location, etc., which define how data is to appear on the page. Examples of commands that are used in PostScript to build a graphics state are: 90 rotate, *x1 y1 x2 y2 x3 y3* curveto, *x1 y1* lineto*,* and the like. In addition to commands which build graphics states, PostScript specifications also include alphanumeric data which is displayed in the data areas on the page. Print settings, such as the specification of a print resolution (e.g. 300 dpi or 600 dpi etc.) may be indicated in a PDL file. Alternately, print settings may be specified in a so-called job ticket attached to the PDL file.

Once the created digital document is described in a PDL, it can be submitted as a PDL description 2, together with print settings, to a print controller 3 suited for sending print jobs to a print engine 24 in an appropriate format. The print controller 3 comprises a Central Processing Unit (CPU) 4, a Random Access Memory (RAM) 6, data storage means such as a hard disk (HD) 8, and an image processing unit 20 having functions for reading, interpreting, rasterizing and halftoning the PDL. The CPU 4 controls the respective units of the print controller 3 in accordance with control programs stored on the hard disk 8. The hard disk 8 is an example of storage means for storing data and programs. The data and programs stored on the HD 8 are read out onto the RAM 6 by the CPU 4 as needed. The RAM 6 has an area for temporarily storing programs and data which are read out from the memory means 8 by the CPU 4, and also a work area which is used by the CPU 4 to execute various processes. The aforementioned units 4, 6, 8 and 20 are interconnected through a bus system 10. The image processing unit 20 is functionally illustrated in Fig. 1 and may be installed on the hard disk as a software component. The image processing unit 20 comprises a reading module 12, a PDL interpreter 14, a rasterizer 16 and a halftoner 18. The reading module 12 is suited for reading out the PDL from the RAM 6 and for executing other tasks described hereinafter. The PDL interpreter 14 has functions for examining the PDL and identifying the command embedded in the data, such as printer control, page format, font management, text layout and graphics. The PDL interpreter 14 generates a code (e.g. a display list) which is data of a format suitable for the rasterizer 16. Rasterizing consists in converting the code generated by the PDL interpreter 14 into a raster image i.e. an array of pixels represented on a substantially continuous tone scale. For example, each pixel in the array may be represented by a 32-bits depth colour value. Once the raster image file is ready, it can passed to a halftoner 18. Halftoning consists in converting the raster image (e.g. 32-bits depth) into an array of dots (bitmap 22) to be used by the print engine 24. The array of dots constitutes information used to drive the print engine 24, for example an ink jet engine, to form marks of a marking substance, for example ink, onto a print medium. The print engine 24 may use a variety of different technologies to transfer colorant on a print media, including inkjet, electrophotography, etc.

The situation has been described wherein conversion of the PDL file occurs on a print server. Alternately, the PDL document may be sent from a workstation directly to a printer, in the case that the printer is provided with an image processing module for converting a PDL document into a bitmap.

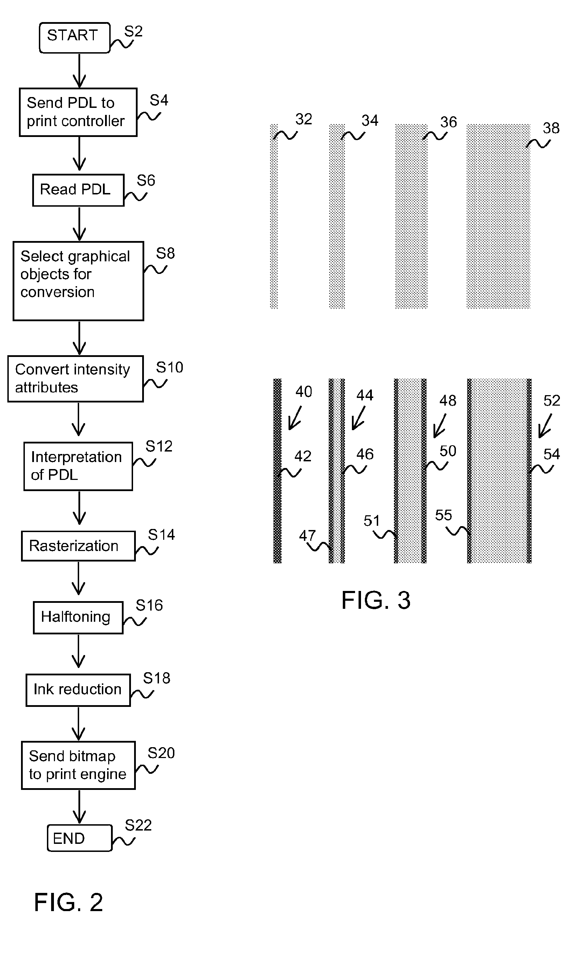

Fig. 2 is a flow diagram illustrating the method according to an embodiment of the invention. The steps are executed by the image processing unit 20 having functions as explained hereinabove.

In step S2, a program for submitting a PDL to the printer 24 is started. In step S4, a PDL specification of a digital document is sent to the print controller 3. The PDL description which is transmitted from the personal computer 1 to the print controller 3 may be firstly stored on the hard disk 8. Subsequently the PDL description is read out from the hard disk 8 by the RAM 6 and is processed by the image processing unit 20 as described hereinafter. In the following, Postsript is taken as an example of a PDL.

In step S6, the PDL description is read by the reading module 12 which has functions for examining the PDL and identifying the commands included in the PDL. In step S6, the reading module 12 identifies operators and attributes in the PDL which relate to the dimensions of graphical objects (alphanumeric data and graphics). Based on the identified attributes, the reading module establishes so-called dimension parameters for alphanumeric data and graphics in the PDL. For example, when the reading module 12 identifies the PostScript operator "setlinewidth" which sets the width of a line in the document, it reads the attribute "width" to which the line is set. The attribute "width" which represents the width of a line is specified in points (72 points correspond to one inch). Depending on the resolution at which the document is to be printed (e.g. according to the print attributes) the reading module establishes the dimension parameter for the line, in printed dots. If the reading module 12 detects the command "1 setlinewidth" in the PostScript file, it establishes the dimension parameter, based on the print settings comprising the resolution at which the document is to be printed. If the defined resolution is 300 dpi, the dimension parameter for the line in the above example "1 setlinewidth" is equal to 4 printed dots (300 dpi/72 inch⁻¹). If the resolution is 600 dpi, the dimension parameter for the line is equal to 8 printed dots (600 dpi/72 inch⁻¹).

As an other example, when the reading module 12 identifies the operator "scalefont" which scales a given font by a given scale factor, it is able to detect the resulting scaled font and to determine its width in points. The reading module 12, based on the width in points, determines the dimension parameter of the alphanumeric character in printed dots, depending on the print resolution.

In addition, in step S6, a so-called intensity parameter is determined for each one of the graphical objects (alphanumeric data and graphics) in the file, based on intensity attributes found in the PDL. For example, when the reading module 12 detects the operator "setgray" which sets the grey level of an object, it is able to determine the so-called intensity parameter for said object. The grey level set by the operator "setgray" is comprised between 0 (black) and 1 (white) and is indicative of the brightness level of an object rendered using a black channel. The intensity parameter which is determined by the reading module 12 is equal to one minus the grey value of the "setgray" operator, scaled by a factor 100, so that it may take values between 0 % (white) and 100 % (black). For example, when the reading module 12 detects the command "0.8 setgray" in the PostScript file, it establishes that the intensity parameter of the object to which the command applies is 20 %. The intensity parameter is indicative of the intensity (i.e. the darkness) of the object.

Other Postscript operators set values of attributes related to the intensity of an object, such as "setcmykcolor" and "setrgbcolor". The operator "setcmykcolor" sets the levels of the channels cyan, magenta, yellow and black in a coloured object. The operator "setrgbcolor" sets the levels of the colour channels red, green and blue. Based on commands containing the operators "setcmykcolor" or "setrgbcolor", the reading module 12 determines an intensity parameter for each colour channel for the object to which the command is applied. The detected level for each colour channel thus enables the reading module 12 to establish an intensity parameter for each colour channel of an object in the PostScript file. This determination results in an intensity parameter for each colour channel, which after normalisation may take values between 0 % and 100 %. For example, in the case that the colour of an object in the file is sky-blue, the reading module 12 detects for this objects the command "0.529 0.808 0.922 setrgbcolor". The intensity parameter of each colour channel is equal to one minus the channel level, scaled by a factor 100. It may take values between 0 % (no colour component for this channel) and 100 % (full colour component for this channel). For the sky-blue object exemplified hereabove, the intensity parameters for the red, green, and blue channels are, respectively, 47.1 %, 19.2 % and 7.8 %. Here, the intensity parameter is indicative of the density, for each colour channel, of the coloured object.

To summarise, as a result of step S6, the dimension and intensity parameters of all graphical objects (alphanumeric data and graphics) in the file have been determined and they are kept in a memory in the form of e.g. a list.

In step S8, the reading module 12 selects graphical objects (graphics and alphanumeric characters) based on their previously determined dimension parameters. In a first example, a selection may consist in selecting the alphanumeric data and graphics in the PDL which have a dimension parameter less than or equal to a pre-determined value, for example 8 printed dots. The pre-determined value may be chosen based on previously carried out experiences and depends on the printing performance of the print engine. Hence, as a first example, in step S8, alphanumeric data and graphics in the Postscript file having a dimension parameter which is less than or equal to 8 printed dots are selected for conversion.

In a second example, another selection may consist in selecting the alphanumeric data and graphics in the PDL which have a dimension parameter less than to a pre-determined first value and having an intensity parameter less than a pre-defined second value. The pre-determined first value may be equal to 8 printed dots and the pre-determined second may be equal to 75 %. Hence, in the second example, in step S8, alphanumeric data and graphics in the Postscript file having a dimension parameter which is less than 8 printed dots and an intensity parameter which is less than 75 % are selected.

In step S10, the intensity parameters of the selected objects in the file are converted. The converted intensity parameter values are used in order to convert the original intensity attributes in the PDL. For example, the attributes of the operators "setgray" or "setcmykcolor" and "setrgbcolor" are converted in the PostScript file, based on the converted intensity parameters. For example, a line which was originally described by the command "0.8 setgray" in the PostScript file had an original intensity parameter equal to 20 %. If the converted intensity parameter is 40 %, for example, this leads to a conversion of the intensity attribute in the file. The converted command applied to this line is then "0.6 setgray", whereby the converted intensity attribute is 0.6.

In the first example, alphanumeric data and graphics with a dimension parameter which is less than or equal to 8 printed dots had been selected in step S8. In step S10, the intensity parameter of each selected object is converted. The conversion may consist in increasing the intensity parameter of the whole object or in converting the intensity gradient within the object, in particular to enhance the intensity at the edges of the objects. The result of the conversion by which the intensity at the edges of the objects is enhanced is illustrated in Fig. 3. Four portions of lines 32, 34, 36 and 38 defined in the PDL are schematically illustrated. The lines 32, 34, 36 and 38 have an intensity parameter equal to 25 % and a dimension parameter equal to, respectively 1, 2, 4 and 8 printed dots. In step S8, these lines have been selected for conversion since they fulfil the selection parameter given as a first example. In step S10, the intensity parameter of these lines is converted. Four portions of the converted lines 40, 44, 48 and 52 are shown in Fig. 3. The thickness of the lines 40, 44, 48 and 52 is the same as the unmodified lines 32, 34, 36 and 38. At the edges 42, 46, 47, 50, 51, 54 and 55 of the lines, the intensity is increased to the value 80 %. The width of the area having an intensity parameter (equal to 80 %) larger than the original intensity parameter (equal to 25 %) is equal to one pixel. As a result of the conversion, the intensity parameter of each one of the selected objects is increased. Hence, the mean density of the selected objects is increased.

In the second example, alphanumeric data and graphics having a dimension parameter which is less than or equal to 8 printed dots and an intensity parameter which is less than 75 % had been selected in step S8. In step S10, the intensity parameter of each selected object is converted. The conversion is illustrated in Fig. 4 which represents the value of the converted intensity parameter as a function of the determined dimension parameter of, for example lines in the PDL. The curves 60, 62 and 64 represent the converted intensity as a function of the determined dimension parameter, applied to lines having an original intensity parameter equal to, respectively 25 %, 50 % and 75 %. As an example, a conversion of the intensity of a line is illustrated in Figure 4 by the point 66. Point 66 indicates that a line having an original intensity characterised by an intensity parameter equal to 25 % and a width equal to 5 printed dots is converted to a line having an intensity parameter equal to 40 %. The dimension parameter of the line remains unchanged. The same holds for the width attributes in the PDL.

In step S10, the result of the intensity parameter conversion is written into the PDL. In the PDL, the intensity attributes (which influence the intensity of the lines) are converted according to the converted intensity parameter. As indicated above, the intensity attributes associated to the commands 'setgrayvalues' may be converted. Similarly, the channel levels associated to the "setcmykcolor" and "setrgbcolor" may be converted according to the converted intensity parameters for each colour channel.

In step S12, interpretation of the PDL is carried out in a conventional way. During the interpretation, the PDL interpreter 14 generates a code which is data of a format suitable for the rasterizer 16. The PDL interpreter 14 converts the PDL file into a display list which contains a series of paths for defining shapes, trajectories and regions of all types.

In step S14, the PDL data is rasterised in a conventional way, i.e. the rasterizer 16. converts the code generated by the PDL interpreter 14 into a raster image i.e. an array of pixels represented on a substantially continuous tone scale. Each pixel in the array may be represented by a 32-bits depth colour value, i.e. by 8 bits for each one of the colorants C, M, Y and K. Once the raster image file is ready, it is passed to the halftoner 18.

In step S16, halftoning of the raster image is carried out. Halftoning consists in converting the raster image (e.g. 32-bits depth) into an array of dots or bitmap (e.g. 4 bit depth).

The array of dots may be used directly by the print engine 24, or alternately, step S18 may take place and may be executed by the halftoner 18. Step S18 consists in an ink reduction operation which is needed to reduce the amount of ink deposited on the paper, so as to avoid undesired effects such as bleeding or cockling. However, step S18 could be skipped or performed elsewhere in the flow.

In step S20, the array of dots (bitmap) is passed to the print engine 24 for printing purposes. The array of dots constitutes information used to drive the ink jet printheads of the print engine 24, to form marks of ink onto a print medium.

In step S22, the program for submitting a PDL to a printer ends.

In an alternative embodiment of the invention, the steps of selecting the lines and alphanumeric characters for conversion are executed during the interpretation of the PDL. As indicated above, the PDL interpreter converts the PDL file into a display list which contains a series of paths. The obtained display list contains paths which have converted intensity attributes if these paths have been selected during interpretation for conversion. The selection may be executed on the basis of a criterion as exemplified hereinabove. The conversion may be executed as disclosed in the first embodiment, whereby reference is made to Figs. 3 and 4.

## Claims

1. Method of processing a digital image, comprising obtaining a description of graphical objects in a page description language, determining dimension parameters of the graphical objects, selecting graphical objects based on a selection criterion which applies to the dimension parameters of the graphical objects, **characterised in that** the method further comprises converting an intensity attribute in the page description language of each one of the selected objects such that an intensity parameter indicative of a density of each selected object is increased.

2. Method of processing a digital image according to claim 1, wherein converting an intensity attribute of each one of the selected graphical objects is executed in the page description language of the selected graphical objects.

3. Method of processing a digital image according to claim 1 or 2, wherein converting an intensity attribute of each one of the selected graphical objects is executed in a display list while interpreting the page description language of graphical objects.

4. Method of processing a digital image according to any of the claims 1-3, wherein converting an intensity attribute of each one of the selected graphical objects is done by increasing the density at the edges of the selected graphical objects

5. Method of processing a digital image according to any of the claims 1-3, wherein converting an intensity attribute of each one of the selected graphical objects is done by applying a conversion function to the intensity parameter such that the converted intensity parameter increases when the dimension parameter of each one of the selected graphical objects decreases.

6. Method of processing a digital image according to any of the preceding claims, wherein the graphical objects which have a dimension parameter which is less than a threshold parameter are selected, the dimension parameter being expressed as a number of printed dots.

7. Apparatus for processing a digital image comprising a reading module for obtaining a description of graphical objects in a page description language, and means for determining dimension parameters of the graphical objects and means for selecting graphical objects based on a selection criterion which applies to the dimension parameters of the graphical objects, **characterised in that** the apparatus further comprises converting means for converting an intensity attribute in the page description language of each one of the selected objects such that an intensity parameter indicative of a density of each selected object is increased.

8. Apparatus according to claim 7, wherein the converting means are adapted to convert an intensity attribute of each one of the selected graphical objects by increasing the density at the edges of the selected graphical objects.

9. Apparatus according to claim 7, wherein the converting means are adapted to convert an intensity attribute of each one of the selected graphical objects by applying a conversion function to the intensity parameter such that the converted intensity parameter increases when the dimension parameter of each one of the selected graphical objects decreases.

10. Computer program product residing on a computer readable medium comprising instructions for causing at least one process unit to perform the method of any of the claims 1 to 6.
